# EUROPÄISCHE PATENTSCHRIFT

(11) **EP 3 562 718 B1**
(45) Veröffentlichungstag und Bekanntmachung des Hinweises auf die Patenterteilung: **06.01.2021**
(21) Anmeldenummer: 17807858.0
(22) Anmeldetag: 30.11.2017
(51) Int. Cl.: B60T 13/66, B60T 8/48, B60T 13/74, B60T 17/22

(54) **STEUERVORRICHTUNG UND VERFAHREN ZUM BETREIBEN EINES ELEKTROMECHANISCHEN BREMSKRAFTVERSTÄRKERS EINES BREMSSYSTEMS EINES FAHRZEUGS**
CONTROL DEVICE AND METHOD TO USE A ELECTROMECHANICAL BRAKE BOOSTER FOR THE BRAKE SYSTEM OF A VEHICLE
DISPOSITIF DE CONTROLE ET PROCEDE POUR L'UTILISATION D'UN SERVOFREIN ELECTROMECANIQUE POUR UN SYSTEME DE FREIN D'UN VEHICULE

(30) Priorität: 29.12.2016 DE 102016226321
(43) Veröffentlichungstag der Anmeldung: 06.11.2019
(73) Patentinhaber: Robert Bosch GmbH, 70442 Stuttgart (DE)
(72) Erfinder: VOLLERT, Herbert, 71665 Vaihingen/Enz (DE); MAHNKOPF, Dirk, 71634 Eglosheim (DE); BINDER, Christian, 74535 Mainhardt (DE); GERDES, Manfred, 71665 Vaihingen/Enz (DE); FUCHS, Oliver, 74360 Ilsfeld (DE)
(86) Internationale Anmeldenummer: PCT/EP2017/080987
(87) Internationale Veröffentlichungsnummer: WO 2018/121954

(56) Entgegenhaltungen:
- WO-A1-2015/185241
- DE-A1-102012 203 698
- DE-A1-102014 213 913

## Beschreibung

Die Erfindung betrifft eine Steuervorrichtung für zumindest einen elektromechanischen Bremskraftverstärker eines Bremssystems eines Fahrzeugs. Ebenso betrifft die Erfindung einen elektromechanischen Bremskraftverstärker für ein Bremssystem eines Fahrzeugs und ein Bremssystem für ein Fahrzeug. Des Weiteren betrifft die Erfindung ein Verfahren zum Betreiben eines elektromechanischen Bremskraftverstärkers eines Bremssystems eines Fahrzeugs.

### Stand der Technik

Aus dem Stand der Technik sind elektromechanische Bremskraftverstärker, wie beispielsweise ein in der DE 20 2010 017 605 U1 offenbarter elektromechanischer Bremskraftverstärker, bekannt, welche jeweils einem Hauptbremszylinder eines Bremssystems eines Fahrzeugs vorlagerbar/vorgelagert sind. Mittels eines Betriebs eines Motors des jeweiligen elektromechanischen Bremskraftverstärkers soll mindestens ein verstellbarer Kolben des Hauptbremszylinders derart in den Hauptbremszylinder hineinverstellbar sein, dass ein Hauptbremszylinderdruck in dem Hauptbremszylinder gesteigert wird.

Ein Verfahren zum Betreiben eines elektromechanischen Bremskraftverstärkers ist aus DE 10 2012 203698 A1 bekannt.

### Offenbarung der Erfindung

Die Erfindung schafft eine Steuervorrichtung für zumindest einen elektromechanischen Bremskraftverstärker eines Bremssystems eines Fahrzeugs mit den Merkmalen des Anspruchs 1, einen elektromechanischen Bremskraftverstärker für ein Bremssystem eines Fahrzeugs mit den Merkmalen des Anspruchs 7, ein Bremssystem für ein Fahrzeug mit den Merkmalen des Anspruchs 8 und ein Verfahren zum Betreiben eines elektromechanischen Bremskraftverstärkers eines Bremssystems eines Fahrzeugs mit den Merkmalen des Anspruchs 10.

### Vorteile der Erfindung

Die vorliegende Erfindung schafft vorteilhafte Möglichkeiten zum Einsetzen eines elektromechanischen Bremskraftverstärkers zur Steigerung eines Drucks in einem dem elektromechanischen Bremskraftverstärker nachgeordneten Hauptbremszylinder und mindestens einem an dem Hauptbremszylinder angebundenen Radbremszylinder, wobei gleichzeitig der elektromechanische Bremskraftverstärker als "Sensorik" zum Ermitteln einer dem elektromechanischen Bremskraftverstärker entgegenwirkenden Laständerung nutzbar ist. Wird mittels der vorliegenden Erfindung eine Laständerung erkannt, so kann mittels des erfindungsgemäßen Betriebs des elektromechanischen Bremskraftverstärkers außerdem verhindert werden, dass eine zu hohe Drehgeschwindigkeit eines Motors des elektromechanischen Bremskraftverstärkers zum Auftreten eines unerwünscht hohen Drucks oder Druckspitzen in dem Hauptbremszylinder führt. Entsprechend ist bei einer Nutzung der vorliegenden Erfindung in einem Bremssystem sichergestellt, dass kein unerwünschter Druck oder Druckspitzen in einer an dem jeweiligen Hauptbremszylinder angebundenen Bremssystemkomponente auftritt. Die vorliegende Erfindung trägt somit zur Reduzierung eines Beschädigungsrisikos an Bremssystemkomponenten des jeweils verwendeten Bremssystems bei. Die vorliegende Erfindung trägt auch zur Vermeidung von mechanischen Belastungen auf den elektromechanischen Bremskraftverstärker bei, wodurch eine Lebensdauer des elektromechanischen Bremskraftverstärkers gesteigert wird.

Beispielsweise kann mittels des erfindungsgemäßen Einsatzes des elektromechanischen Bremskraftverstärker als "Sensorik" schnell eine Situation erkannt werden, in welcher eine hydraulische Steifigkeit des jeweiligen Bremssystems zunimmt, wie dies beispielsweise bei einem Schließen von Radeinlassventilen des jeweiligen Bremssystems während einer Antiblockierregelung auftritt. Während eine Übertragung eines Signals bezüglich des Schließens der Radeinlassventile an eine herkömmliche Steuerelektronik des elektromechanischen Bremskraftverstärkers in der Regel mindestens 30 ms (Millisekunden) benötigt, kann mittels der vorliegenden Erfindung die Laständerung viel schneller erkannt und entsprechend frühzeitiger durch eine Begrenzung des Betriebs des elektromechanischen Bremskraftverstärkers entsprechend der festgelegten Höchst-Soll-Größe reagiert werden. Mittels der auf diese Weise bewirkbaren Begrenzung einer rotatorischen Energie des Motors des elektromechanischen Bremskraftverstärkers kann dessen Betrieb so an die Laständerung angepasst werden, dass kein unerwünscht hoher Druck oder Druckspitzen in dem Hauptbremszylinder oder weiteren Teilen des jeweiligen Bremssystems zu befürchten sind.

Vor allem während einer Antiblockierregelung (ABS-Regelung, bzw. ESP-Regelung) wird mittels mindestens einer Pumpe/Rückförderpumpe des Bremssystems vergleichsweise viel Bremsflüssigkeit in dem Hauptbremszylinder auftreten. Zusätzlich erfolgt ein Schließen von Radeinlassventilen des jeweiligen Bremssystems. Mittels der vorliegenden Erfindung kann jedoch durch den Einsatz des elektromechanischen Bremskraftverstärker als "Sensorik" schnell auf ein möglicherweise vorliegendes Risiko eines unerwünscht hohen Drucks in dem Hauptbremszylinder reagiert werden. Die vorliegende Erfindung trägt somit zur Reduzierung eines Beschädigungsrisikos auch während der Antiblockierregelung bei. Der herkömmliche Nachteil des elektromechanischen Bremskraftverstärkers, dass dieser in der Regel nicht elastisch reagiert und aufgrund seiner hohen Getriebeübersetzung und seiner hohen Getriebereibung ein hohes Haltevermögen aufweist, kann somit behoben werden. Eine Schädigung des Bremssystems ist damit selbst nach einem mehrmaligen Ausführen von Antiblockierregelungen nicht zu befürchten. Eine Ausstattung des Bremssystems mit der im Weiteren beschriebenen Steuervorrichtung finanziert sich somit leicht mittels eingesparter Reparaturkosten.

In einer vorteilhaften Ausführungsform der Steuervorrichtung ist die Elektronikeinrichtung dazu ausgelegt, eine Schätzgröße für eine Einbremskraft des einem Hauptbremszylinder des Bremssystems vorgelagerten elektromechanischen Bremskraftverstärkers in den Hauptbremszylinder unter Berücksichtigung zumindest der aktuellen Stromstärke des Motorstroms des Motors und des aktuellen Drehwinkels des Rotors des Motors zu schätzen und die Höchst-Soll-Größe unter Berücksichtigung der Schätzgröße für die Einbremskraft festzulegen. Wie unten genauer erläutert wird, ist die Schätzgröße für die Einbremskraft des elektromechanischen Bremskraftverstärkers in den Hauptbremszylinder eine verlässliche "Sensorgröße" um ein aktuelles Risiko bezüglich eines möglichen Überbremsens oder einer Bremssystemüberlastung aufgrund einer zu großen rotatorischen Energie des elektromechanischen Bremskraftverstärkers abzuschätzen. Mittels des Festlegens der Höchst-Soll-Größe unter Berücksichtigung der Schätzgröße für die Einbremskraft kann somit verlässlich sichergestellt werden, dass der elektromechanische Bremskraftverstärker auf eine für das Bremssystem schonende Weise eingesetzt wird und gleichzeitig Unterbremsungen aufgrund eines zu geringen Einsatzes des elektromechanischen Bremskraftverstärkers ausgeschlossen sind.

Vorzugsweise ist die Elektronikeinrichtung dazu ausgelegt, ein Lastmoment, welches das Bremssystem dem Motor des elektromechanischen Bremskraftverstärkers entgegensetzt, unter Berücksichtigung zumindest der aktuellen Stromstärke des Motorstroms des Motors und des aktuellen Drehwinkels des Rotors des Motors zu schätzen und die Höchst-Soll-Größe und/oder die Schätzgröße für die Einbremskraft unter Berücksichtigung des geschätzten Lastmoments festzulegen. Das Lastmoment kann mittels des Einsatzes des elektromechanischen Bremskraftverstärkers als "Sensorik" verlässlich festgelegt werden, da der Motor des elektromechanischen Bremskraftverstärkers "spürt", welche (statische) Last das Bremssystem dem Motor des elektromechanischen Bremskraftverstärkers entgegensetzt.

Die Elektronikeinrichtung kann beispielsweise dazu ausgelegt sein, ein Motormoment des Motors des elektromechanischen Bremskraftverstärkers unter Berücksichtigung zumindest der aktuellen Stromstärke des Motorstroms des Motors festzulegen, eine Winkelbeschleunigung des Rotors des Motors des elektromechanischen Bremskraftverstärkers unter Berücksichtigung zumindest des aktuellen Drehwinkels des Rotors des Motors festzulegen, ein Produkt aus der Winkelbeschleunigung des Rotors des Motors des elektromechanischen Bremskraftverstärkers und einer Trägheit des Motors festzulegen, und das Lastmoment unter Berücksichtigung zumindest einer Differenz zwischen dem Motormoment des Motors und dem Produkt aus der Winkelbeschleunigung und der Trägheit festzulegen. Die zum Schätzen des Lastmoments ausgeführten Prozesse erlauben somit eine relativ kostengünstige und verhältnismäßig bauraumsparende Ausbildung der Elektronikeinrichtung.

In einer weiteren vorteilhaften Ausführungsform der Steuervorrichtung ist die Elektronikeinrichtung dazu ausgelegt, eine Laständerung einer Last, welche das Bremssystem dem Motor des elektromechanischen Bremskraftverstärkers entgegensetzt, unter Berücksichtigung zumindest der aktuellen Stromstärke des Motorstroms des Motors und des aktuellen Drehwinkels des Rotors des Motors zu schätzen, und die Höchst-Soll-Größe und/oder die Schätzgröße für die Einbremskraft unter Berücksichtigung der geschätzten Laständerung festzulegen. Auch als "Sensorik" zum Schätzen der Laständerung ist der elektromechanische Bremskraftverstärker bei dieser Ausführungsform der vorliegenden Erfindung vorteilhaft einsetzbar.

Insbesondere kann die Elektronikeinrichtung dazu ausgelegt sein, einen Verstellweg eines Kolbens des elektromechanischen Bremskraftverstärkers unter Berücksichtigung zumindest des aktuellen Drehwinkels des Rotors des Motors festzulegen, eine mittels des Motors des elektromechanischen Bremskraftverstärkers ausgeübte Motorkraft unter Berücksichtigung des Lastmoments festzulegen, eine zeitliche Ableitung oder einen Gradienten der mittels des Motors des elektromechanischen Bremskraftverstärkers ausgeübten Motorkraft festzulegen, und die Laständerung als Quotienten aus der zeitlichen Ableitung oder dem Gradienten der Motorkraft geteilt durch den Verstellweg des Kolbens des elektromechanischen Bremskraftverstärkers festzulegen. Damit ist auch das Schätzen der Laständerung mittels einer vergleichsweise kostengünstigen und relativ wenig Bauraum benötigenden Steuervorrichtung ausführbar.

Die vorausgehend beschriebenen Vorteile werden auch durch einen elektromechanischen Bremskraftverstärker für ein Bremssystem eines Fahrzeugs mit einer derartigen Steuervorrichtung bewirkt. Ein entsprechender elektromechanischer Bremskraftverstärker ist Fahrzeugs gemäß den oben beschriebenen Ausführungsformen der Steuervorrichtung weiterbildbar.

Auch ein Bremssystem für ein Fahrzeug mit einer entsprechenden Steuervorrichtung und dem elektromechanischen Bremskraftverstärker realisiert die oben beschriebenen Vorteile. Auch ein derartiges Bremssystem ist Fahrzeugs gemäß den oben beschriebenen Ausführungsformen der Steuervorrichtung weiterbildbar. Der elektromechanische Bremskraftverstärker kann insbesondere einem Hauptbremszylinder des Bremssystems vorgelagert sein.

Des Weiteren schafft auch ein Ausführen eines korrespondierenden Verfahrens zum Betreiben eines elektromechanischen Bremskraftverstärkers eines Bremssystems eines Fahrzeugs die oben schon beschriebenen Vorteile. Es wird darauf hingewiesen, dass das Verfahren zum Betreiben eines elektromechanischen Bremskraftverstärkers eines Bremssystems eines Fahrzeugs gemäß den oben beschriebenen Ausführungsformen des Steuervorrichtung und/oder des damit ausgestatteten Bremssystems weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a und 1b: Flussdiagramme zum Erläutern einer Ausführungsform des Verfahrens zum Betreiben eines elektromechanischen Bremskraftverstärkers eines Bremssystems eines Fahrzeugs; und
- Fig. 2: eine schematische Darstellung einer Ausführungsform der Steuervorrichtung für zumindest einen elektromechanischen Bremskraftverstärker eines Bremssystems eines Fahrzeugs.

### Ausführungsformen der Erfindung

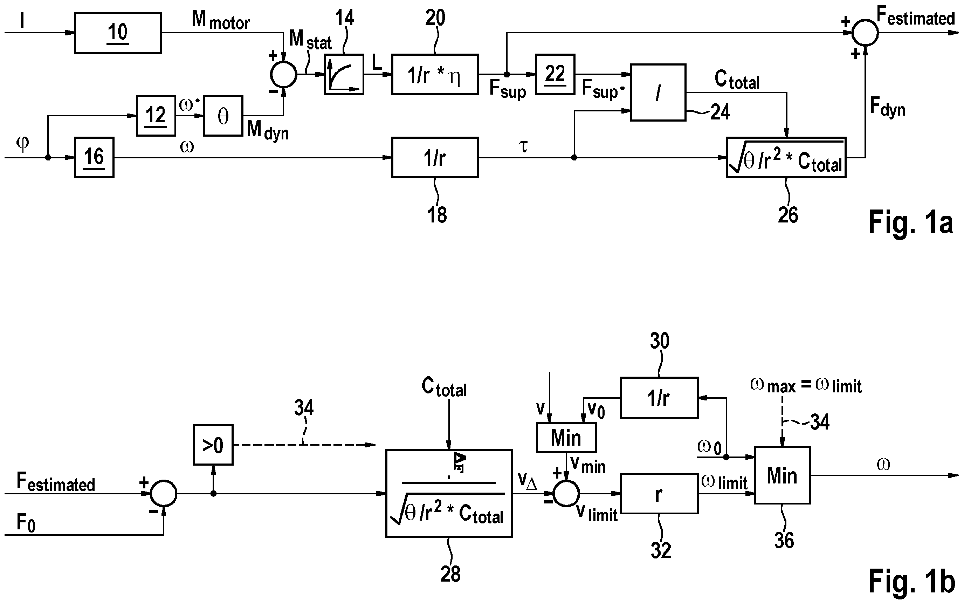

Fig. 1a und 1b zeigen Flussdiagramme zum Erläutern einer Ausführungsform des Verfahrens zum Betreiben eines elektromechanischen Bremskraftverstärkers eines Bremssystems eines Fahrzeugs.

Eine Ausführbarkeit des im Weiteren beschriebenen Verfahrens ist weder auf einen bestimmten Bremssystemtyp des mit dem elektromechanischen Bremskraftverstärker ausgestatteten Bremssystems noch auf einen bestimmten Fahrzeugtyp/Kraftfahrzeugtyp des mit dem Bremssystem bestückten Fahrzeugs/Kraftfahrzeugs beschränkt. Unter dem elektromechanischen Bremskraftverstärker wird ein mit einem (elektrischen) Motor ausgestatteter Bremskraftverstärker verstanden. Außerdem ist der elektromechanische Bremskraftverstärker einem Hauptbremszylinder des Bremssystems so vorgelagert, dass mittels eines Betriebs des Motors des elektromechanischen Bremskraftverstärkers mindestens ein verstellbarer Kolben des Hauptbremszylinders in den Hauptbremszylinder verstellbar ist/verstellt wird.

Zum Betreiben des elektromechanischen Bremskraftverstärkers wird bei dem im Weiteren beschriebenen Verfahren eine Soll-Größe ω bezüglich einer Soll-Drehgeschwindigkeit ω des Motors des elektromechanischen Bremskraftverstärkers unter Berücksichtigung zumindest eines (nicht dargestellten) Bremsvorgabesignals bezüglich eines Bremswunsches eines Fahrers des Fahrzeugs und/oder einer Geschwindigkeitssteuerautomatik des Fahrzeugs festgelegt. Das Verfahren zeichnet sich dadurch aus, dass eine Höchst-Soll-Größe ωₘₐₓ bezüglich einer maximalen Soll-Drehgeschwindigkeit ωₘₐₓ des Motors des elektromechanischen Bremskraftverstärkers festgelegt wird, wobei die Soll-Größe ω bezüglich der Soll-Drehgeschwindigkeit ω des Motors des elektromechanischen Bremskraftverstärkers höchstens gleich der festgelegten Höchst-Soll-Größe ωₘₐₓ festgelegt wird. (Die Höchst-Soll-Größe ωₘₐₓ dient damit als "obere Schranke" oder als "Höchstgrenze" beim Festlegen der Soll-Größe ω bezüglich der Soll-Drehgeschwindigkeit ω des Motors des elektromechanischen Bremskraftverstärkers.) Beispielhaft werden bei dem hier beschriebenen Verfahren die Soll-Drehgeschwindigkeit ω des Motors des elektromechanischen Bremskraftverstärkers als Soll-Größe ω und die maximalen Soll-Drehgeschwindigkeit ωₘₐₓ als Höchst-Soll-Größe (ωₘₐₓ festgelegt. Es wird jedoch darauf hingewiesen, dass auch andere der Soll-Drehgeschwindigkeit ω des Motors des elektromechanischen Bremskraftverstärkers und der maximalen Soll-Drehgeschwindigkeit ωₘₐₓ entsprechende Größen als die Soll-Größe ω und die Höchst-Soll-Größe ωₘₐₓ festgelegt werden können.

Das Festlegen der Höchst-Soll-Größe ωₘₐₓ erfolgt unter Berücksichtigung zumindest einer aktuellen Stromstärke I eines Motorstroms des Motors des elektromechanischen Bremskraftverstärkers und eines aktuellen Drehwinkels ϕ eines Rotors des Motors des elektromechanischen Bremskraftverstärkers. Damit können zum Festlegen der Höchst-Soll-Größe ωₘₐₓ bezüglich der maximalen Soll-Drehgeschwindigkeit ωₘₐₓ des Motors des elektromechanischen Bremskraftverstärkers Werte verwendet werden, welche leicht schätzbar oder messbar sind. (Der aktuelle Drehwinkel ϕ des Rotors des Motors kann beispielsweise mittels eines Rotorlagesignals ermittelt/geschätzt werden.) Die aktuelle Stromstärke I des Motorstroms und der aktuelle Drehwinkel ϕ des Rotors des Motors des elektromechanischen Bremskraftverstärkers sind außerdem Werte/Signale mit einer sehr hohen Dynamik. Damit eignet sich das hier beschriebene Verfahren vorteilhaft zum frühzeitigen Reagieren auf eine Änderung einer hydraulischen Steifigkeit des mit dem elektromechanischen Bremskraftverstärker zusammenwirkenden Bremssystems.

Bei der hier beschriebenen Ausführungsform des Verfahrens wird in einem mittels der Fig. 1a schematisch wiedergegebenen Teilschritt eine Schätzgröße F_{estimated} für eine Einbremskraft des (dem Hauptbremszylinder des Bremssystems vorgelagerten) elektromechanischen Bremskraftverstärkers in den Hauptbremszylinder zum Festlegen der Höchst-Soll-Größe ωₘₐₓ bezüglich der maximalen Soll-Drehgeschwindigkeit ωₘₐₓ des Motors des elektromechanischen Bremskraftverstärkers geschätzt. Erkennbar ist, dass das Schätzen der Schätzgröße F_{estimated} für die Einbremskraft des elektromechanischen Bremskraftverstärkers in den Hauptbremszylinder unter Berücksichtigung zumindest der aktuellen Stromstärke I des Motorstroms des Motors und des aktuellen Drehwinkels ϕ des Rotors des Motors erfolgt.

Insbesondere wird zum Schätzen der Schätzgröße F_{estimated} für die Einbremskraft zumindest ein Lastmoment/Gegenmoment L, welches das Bremssystem dem Motor des elektromechanischen Bremskraftverstärkers entgegensetzt, unter Berücksichtigung zumindest der aktuellen Stromstärke I des Motorstroms des Motors und des aktuellen Drehwinkels ϕ des Rotors des Motors geschätzt. Dazu wird ein Motormoment Mₘₒₜₒᵣ des Motors des elektromechanischen Bremskraftverstärkers unter Berücksichtigung zumindest der aktuellen Stromstärke I des Motorstroms des Motors festgelegt. Zum Herleiten des Motormoments Mₘₒₜₒᵣ des Motors des elektromechanischen Bremskraftverstärkers aus der aktuellen Stromstärke I des Motorstroms des Motors werden in einem Block 10 hinterlegte motorspezifische Daten berücksichtigt. Das Motormoment Mₘₒₜₒᵣ des Motors des elektromechanischen Bremskraftverstärkers bewirkt zu einem dynamischen Anteil M_{dyn} eine "Dynamik des Motors" und zu einem statischen Anteil Mₛₜₐₜ eine "Überwindung" des dem Motor des elektromechanischen Bremskraftverstärkers entgegenwirkenden Lastmoments/Gegenmoments L. Der dynamische Anteil M_{dyn} kann als Produkt aus einer Winkelbeschleunigung ω• des Rotors des Motors des elektromechanischen Bremskraftverstärkers und einer Trägheit θ des Motors des elektromechanischen Bremskraftverstärkers berechnet werden. Die Winkelbeschleunigung ω• des Rotors des Motors des elektromechanischen Bremskraftverstärkers kann leicht unter Berücksichtigung zumindest des aktuellen Drehwinkels ϕ des Rotors des Motors festgelegt werden. Beispielsweise ergibt sich die Winkelbeschleunigung ω• des Rotors des Motors aus einer in einem Block 12 ausgeführten zweifachen zeitlichen Ableitung des aktuellen Drehwinkels ϕ des Rotors des Motors. Der statische Anteil Mₛₜₐₜ des Motormoments Mₘₒₜₒᵣ des Motors des elektromechanischen Bremskraftverstärkers ergibt sich damit aus einer Differenz zwischen dem Motormoment Mₘₒₜₒᵣ und dem dynamischen Anteil M_{dyn} des Motormoments Mₘₒₜₒᵣ. Anschließend kann das dem Motor des elektromechanischen Bremskraftverstärkers entgegenwirkende Lastmoment L unter Berücksichtigung des statischen Anteils Mₛₜₐₜ des Motormoments Mₘₒₜₒᵣ des Motors des elektromechanischen Bremskraftverstärkers geschätzt werden. Beispielsweise kann der statische Anteil Mₛₜₐₜ unter Verwendung eines in einem Block 14 hinterlegten Filters und/oder einer (entsprechend hinterlegten) Kennlinie in das dem Motor des elektromechanischen Bremskraftverstärkers entgegenwirkende Lastmoment L umgewandelt werden. (Danach können die Schätzgröße F_{estimated} für die Einbremskraft und/oder die Höchst-Soll-Größe ωₘₐₓ bezüglich der maximalen Soll-Drehgeschwindigkeit ωₘₐₓ des Motors des elektromechanischen Bremskraftverstärkers unter Berücksichtigung des geschätzten Lastmoments L festgelegt werden.)

Bei der hier beschriebenen Ausführungsform wird zum Festlegen der Höchst-Soll-Größe ωₘₐₓ bezüglich der maximalen Soll-Drehgeschwindigkeit ωₘₐₓ des Motors des elektromechanischen Bremskraftverstärkers, bzw. zum Schätzen der Schätzgröße F_{estimated} für die Einbremskraft, zumindest eine Laständerung Cₜₒₜₐₗ einer Last, welche das Bremssystem dem Motor des elektromechanischen Bremskraftverstärkers entgegensetzt, geschätzt. Das Schätzen der Laständerung Cₜₒₜₐₗ erfolgt ebenfalls unter Berücksichtigung zumindest der aktuellen Stromstärke I des Motorstroms des Motors des elektromechanischen Bremskraftverstärkers und des aktuellen Drehwinkels ϕ des Rotors des Motors des elektromechanischen Bremskraftverstärkers. Danach kann die Schätzgröße Festimated für die Einbremskraft, bzw. die Höchst-Soll-Größe ωₘₐₓ bezüglich der maximalen Soll-Drehgeschwindigkeit ωₘₐₓ, unter Berücksichtigung der geschätzten Laständerung Cₜₒₜₐₗ festgelegt werden.

Ein Verstellweg/eine Translation τ eines Kolbens des elektromechanischen Bremskraftverstärkers kann unter Berücksichtigung zumindest des aktuellen Drehwinkels ϕ des Rotors des Motors festgelegt werden. Z.B. ergibt sich mittels einer in einem Block 16 ausgeführten zeitlichen Ableitung aus dem aktuellen Drehwinkel ϕ des Rotors des Motors des elektromechanischen Bremskraftverstärkers eine Winkelgeschwindigkeit ω des Rotors des Motors. In einem Block 18 ist eine Getriebegröße r eines Getriebes des elektromechanischen Bremskraftverstärkers hinterlegt, mittels welcher die Winkelgeschwindigkeit ω des Rotors des Motors in den Verstellweg/die Translation τ des dem Getriebe nachgeordneten Kolbens des elektromechanischen Bremskraftverstärkers umgerechnet wird. Der dem Getriebe nachgeordnete Kolben kann z.B. ein Ventilkörper (Valve Body) oder ein Verstärkerkörper (Boost Body) des elektromechanischen Bremskraftverstärkers sein.

Unter Berücksichtigung des Lastmoments L wird eine mittels des Motors des elektromechanischen Bremskraftverstärkers ausgeübte Motorkraft/Unterstützungskraft Fₛᵤₚ festgelegt. Beispielsweise sind in einem Block 20 die Getriebegröße r des Getriebes des elektromechanischen Bremskraftverstärkers und ein Wirkungsgrad η des elektromechanischen Bremskraftverstärkers hinterlegt. Mittels dieser Größen kann eine mittels des Motors des elektromechanischen Bremskraftverstärkers ausgeübte Motorkraft/Unterstützungskraft Fₛᵤₚ aus dem Lastmoment L hergeleitet werden. In einem Block 22 wird außerdem eine zeitliche Ableitung/ein Gradient Fsup• der mittels des Motors des elektromechanischen Bremskraftverstärkers ausgeübten Motorkraft/Unterstützungskraft Fsup ermittelt.

In einem weiteren Block 24 wird ein Quotient Cₜₒₜₐₗ aus der zeitlichen Ableitung/dem Gradienten Fsup• geteilt durch den Verstellweg/die Translation τ des Kolbens des elektromechanischen Bremskraftverstärkers berechnet, welcher die Laständerung Ctotai angibt. Die Laständerung Cₜₒₜₐₗ kann auch als eine Steifigkeit (Stiffness) umschrieben werden.

Die Laständerung Cₜₒₜₐₗ wird an einen Block 26 ausgegeben, in welchem die Trägheit θ des Motors des elektromechanischen Bremskraftverstärkers und die Getriebegröße r des Getriebes des elektromechanischen Bremskraftverstärkers hinterlegt sind. Damit kann aus der Laständerung Cₜₒₜₐₗ eine mittels des elektromechanischen Bremskraftverstärkers ausgeübte dynamische Kraft F_{dyn} berechnet werden. Die mittels des elektromechanischen Bremskraftverstärkers zu ausgeübte dynamische Kraft F_{dyn} kann auch als eine "Kraft aus einer kinetischen Energie" des Rotors des Motors des elektromechanischen Bremskraftverstärkers bezeichnet werden.

Aus einer Summe der mittels des elektromechanischen Bremskraftverstärkers ausgeübten Motorkraft/Unterstützungskraft Fₛᵤₚ und der mittels des elektromechanischen Bremskraftverstärkers ausgeübten dynamischen Kraft F_{dyn} kann die Schätzgröße F_{estimated} für eine Einbremskraft (oder "Drucksteigerkraft") des elektromechanischen Bremskraftverstärkers, mit welcher der elektromechanische Bremskraftverstärkers in den Hauptbremszylinder einbremst und den darin vorliegenden Hauptbremszylinderdruck bewirkt/steigert, berechnet werden. Optionaler Weise kann für die Schätzgröße F_{estimated} für die Einbremskraft noch eine (nicht skizzierte) Reibungskorrektur ausgeführt werden. Die in den vorausgehenden Absätzen beschriebenen Teilschritte bieten eine besonders vorteilhafte und schnell ausführbare Möglichkeit zum verlässlichen Schätzen der Schätzgröße F_{estimated} für die Einbremskraft. Eine Ausführbarkeit des Verfahrens ist jedoch nicht auf diese Teilschritte limitiert. Anschließend wird die Höchst-Soll-Größe ωₘₐₓ unter Berücksichtigung der Schätzgröße Festimated für die Einbremskraft festgelegt wird. Dies ist mittels des in Fig. 1b schematisch wiedergegebenen Verfahrensschritts gezeigt:
Zuerst wird eine Differenz ΔF zwischen der mittels des zuvor beschriebenen Verfahrensschritts festgelegten Schätzgröße F_{estimated} für die Einbremskraft des elektromechanischen Bremskraftverstärkers in den Hauptbremszylinder und einer vorgegebenen Vergleichskraft Fo ermittelt. (Mittels der Vergleichskraft Fo kann untersucht werden, ob die aktuell anstehende Einbremskraft gleich der Schätzgröße F_{estimated} zu hoch ist.) Die Differenz ΔF wird danach in einem Block 28 ausgegeben, in welchem die Trägheit θ des Motors des elektromechanischen Bremskraftverstärkers, die Getriebegröße r des Getriebes des elektromechanischen Bremskraftverstärkers und die Laständerung Cₜₒₜₐₗ vorliegen, in eine Geschwindigkeitsgröße v_{Δ} umgewandelt.

Unter Berücksichtigung zumindest des (nicht skizzierten) Bremsvorgabesignals (bezüglich des Bremswunsches des Fahrers des Fahrzeugs und/oder der Geschwindigkeitssteuerautomatik des Fahrzeugs) wird ein Ausgangswert ω₀ bezüglich einer Ausgangs-Drehgeschwindigkeit ω₀ des Motors des elektromechanischen Bremskraftverstärkers festgelegt. In einem Block 30, in welchem die Getriebegröße r des Getriebes des elektromechanischen Bremskraftverstärkers hinterlegt ist, wird der Ausgangswert ω₀ bezüglich der Ausgangs-Drehgeschwindigkeit ω₀ des Motors in eine Ausgangsgeschwindigkeit vo umgerechnet. Danach wird ein Minimum vₘᵢₙ aus der Ausgangsgeschwindigkeit vo und einer aktuellen Geschwindigkeit v bestimmt. Als Differenz zwischen dem Minimum vₘᵢₙ und der Geschwindigkeitsgröße v_{Δ} wird eine Grenzgeschwindigkeit vₗᵢₘᵢₜ bestimmt. Mittels der in einem Block 32 hinterlegten Getriebegröße r des Getriebes des elektromechanischen Bremskraftverstärkers wird die Grenzgeschwindigkeit vₗᵢₘᵢₜ in eine Grenzgröße ωₗᵢₘᵢₜ umgewandelt. Die Grenzgröße ωₗᵢₘᵢₜ gibt eine Drehgeschwindigkeit an, mit welchem der Motor des elektromechanischen Bremskraftverstärkers in Hinblick auf die aktuelle hydraulische Steifigkeit des Bremssystems noch problemlos betreibbar ist.

Ist die Differenz ΔF zwischen der Schätzgröße F_{estimated} für die Einbremskraft und der Vergleichskraft F₀ größer 0, so wird mittels eines Signals 34 einem Block 36 vorgegeben, die an ihn ausgegebenen Grenzgröße ωₗᵢₘᵢₜ als die Höchst-Soll-Größe ωₘₐₓ zu übernehmen. Zusätzlich wird der Block 36 mittels des Signals 34 zur Begrenzung der Soll-Größe ω durch die Höchst-Soll-Größe ωₘₐₓ aktiviert. Der Block 36 gibt in diesem Fall ein Minimum aus der Ausgangs-Größe ω₀ und der Höchst-Soll-Größe ωₘₐₓ als Soll-Größe ω aus. Ist die Differenz ΔF zwischen der Schätzgröße F_{estimated} für die Einbremskraft und der Vergleichskraft F₀ kleiner 0, so unterbleibt eine Ausgabe des Signals 34 an den Block 36. Damit wird die Soll-Größe ω gleich der Ausgangs-Größe ω₀ festgelegt. (Die Höchst-Soll-Größe ωₘₐₓ entspricht damit einer mittels des Motors des elektromechanischen Bremskraftverstärkers maximal ausführbaren Drehgeschwindigkeit.) In beiden Fällen wird somit die Soll-Größe ω bezüglich der Soll-Drehgeschwindigkeit ω des Motors des elektromechanischen Bremskraftverstärkers (zum Ansteuern des Motors des elektromechanischen Bremskraftverstärkers) höchstens gleich der festgelegten Höchst-Soll-Größe ωₘₐₓ festgelegt.

Nach der Festlegung der Soll-Größe ω bezüglich der Soll-Drehgeschwindigkeit ω des Motors des elektromechanischen Bremskraftverstärkers wird der Motor des elektromechanischen Bremskraftverstärkers unter Berücksichtigung der festgelegten Soll-Größe ω angesteuert. Vorzugsweise geschieht dies so, dass während des resultierenden Betriebs des elektromechanischen Bremskraftverstärkers eine Ist-Drehgeschwindigkeit des Motors des elektromechanischen Bremskraftverstärkers die zuvor festgelegte Soll-Größe ω (bzw. die entsprechende Soll-Drehgeschwindigkeit ω) nicht übersteigt.

Das hier beschriebene Verfahren bewirkt eine Limitierung des Betriebs des elektromechanischen Bremskraftverstärkers derart, dass selbst bei Laständerungen aufgrund einer geänderten hydraulischen Steifigkeit des Bremssystems kein Auftreten eines Überdrucks oder von Druckspitzen darin zu befürchten ist. Neben einer Verhinderung von einer Bremssystemüberlastung können mittels des hier beschriebenen Verfahrens jedoch auch Unterbremsungen ausgeschlossen werden. Des Weiteren kann bei dem hier beschriebenen Verfahren frühzeitig auf ein (erfolgtes) Schließen von Radeinlassventilen des Bremssystems reagiert werden, wobei jedoch gleichzeitig sichergestellt ist, dass die entsprechende Reduzierung des Betriebs des Motors des elektromechanischen Bremskraftverstärkers erst nach dem tatsächlich erfolgten Schließen der Radeinlassventile erfolgt. Das hier beschriebene Verfahren bewirkt somit nicht nur eine Begrenzung des Betriebs des Motors des elektromechanischen Bremskraftverstärkers zur Schonung des damit zusammenwirkenden Bremssystems, sondern stellt auch sicher, dass mittels des elektromechanischen Bremskraftverstärkers weiterhin eine signifikante Bremskraftverstärkung in solchen Situationen, in welchen dies unkritisch ist, bewirkbar ist.

Es wird abschließend noch darauf hingewiesen, dass die in Fig. 1a und 1b dargestellten Teilschritte schneller ausführbar sind, als ein Datentransfer/Signaltransfer eines mittels mindestens eines Drucksensors gemessenen Messwerts über einen Datenbus. Ein Ausführen des hier beschriebenen Verfahrens erlaubt somit ein "Vorhersagen" einer Änderung der hydraulischen Steifigkeit des Bremssystems (gegenüber einem Messen der Änderung der hydraulischen Steifigkeit des Bremssystems).

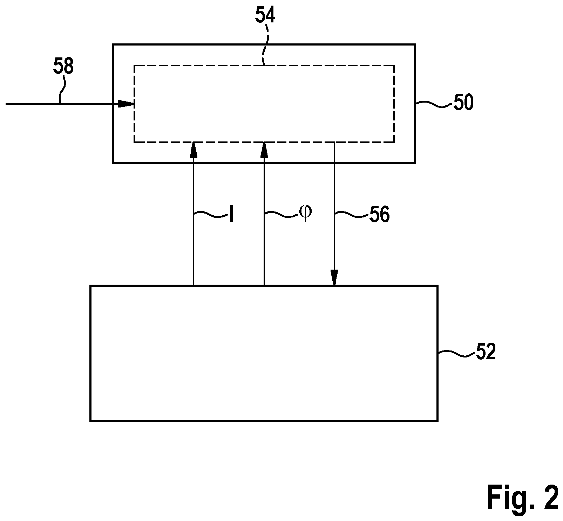

Fig. 2 zeigt eine schematische Darstellung einer Ausführungsform der Steuervorrichtung für zumindest einen elektromechanischen Bremskraftverstärker eines Bremssystems eines Fahrzeugs.

Eine Verwendbarkeit der im Weiteren beschriebenen Steuervorrichtung 50 ist weder auf einen bestimmten Bremssystemtyp des Bremssystems noch auf einen bestimmten Fahrzeugtyp/Kraftfahrzeugtyp des mit dem Bremssystem bestückten Fahrzeugs/Kraftfahrzeugs beschränkt. Bezüglich des mit der Steuervorrichtung 50 zusammenwirkenden elektromechanischen Bremskraftverstärkers 52 wird auf die vorausgehende Beschreibung verwiesen.

Die Steuervorrichtung 50 umfasst eine Elektronikeinrichtung 54, welche dazu ausgelegt ist, unter Berücksichtigung zumindest eines an die Elektronikeinrichtung 54 ausgegebenen Bremsvorgabesignals 58 bezüglich eines Bremswunsches eines Fahrers des Fahrzeugs und/oder einer (nicht dargestellten) Geschwindigkeitssteuerautomatik des Fahrzeugs zumindest eine Soll-Größe ω bezüglich einer Soll-Drehgeschwindigkeit ω eines Motors des elektromechanischen Bremskraftverstärkers 52 festzulegen. Außerdem ist die Elektronikeinrichtung 54 dazu ausgelegt unter Berücksichtigung der festgelegten Soll-Größe ω mindestens ein Steuersignal 56 an den Motor des elektromechanischen Bremskraftverstärkers 52 auszugeben, bzw. den elektromechanischen Bremskraftverstärker 52 zu betreiben. Vorzugsweise erfolgt die Ausgabe des mindestens einen Steuersignals 56 an den Motor des elektromechanischen Bremskraftverstärkers 52 derart, dass während des resultierenden Betriebs des elektromechanischen Bremskraftverstärkers 52 eine Ist-Drehgeschwindigkeit des Motors des elektromechanischen Bremskraftverstärkers 52 die zuvor festgelegte Soll-Größe ω (bzw. die entsprechende Soll-Drehgeschwindigkeit ω) nicht übersteigt.

Zusätzlich ist die Elektronikeinrichtung 54 dazu ausgelegt, unter Berücksichtigung zumindest einer aktuellen Stromstärke I eines Motorstroms des Motors des elektromechanischen Bremskraftverstärkers 52 und eines aktuellen Drehwinkels ϕ eines Rotors des Motors des elektromechanischen Bremskraftverstärkers 52 eine Höchst-Soll-Größe ωₘₐₓ bezüglich einer maximalen Soll-Drehgeschwindigkeit ωₘₐₓ des Motors des elektromechanischen Bremskraftverstärkers 52 festzulegen und die Soll-Größe ω bezüglich der Soll-Drehgeschwindigkeit ω des Motors des elektromechanischen Bremskraftverstärkers 52 höchstens gleich der festgelegten Höchst-Soll-Größe ωₘₐₓ festzulegen.

Somit bewirkt auch die Verwendung der Steuervorrichtung 50 die oben schon erläuterten Vorteile. Die Elektronikeinrichtung 54 kann zusätzlich zum Ausführen mindestens eines der vorausgehend beschriebenen Verfahrensschritte ausgebildet sein.

## Patentansprüche

1. Steuervorrichtung (50) für zumindest einen elektromechanischen Bremskraftverstärker (52) eines Bremssystems eines Fahrzeugs, mit
einer Elektronikeinrichtung (54), welche dazu ausgelegt ist,
- unter Berücksichtigung zumindest eines an die Elektronikeinrichtung (54) ausgegebenen Bremsvorgabesignals (58) bezüglich eines Bremswunsches eines Fahrers des Fahrzeugs und/oder einer Geschwindigkeitssteuerautomatik des Fahrzeugs zumindest eine Soll-Größe (ω) bezüglich einer Soll-Drehgeschwindigkeit (ω) eines Motors des elektromechanischen Bremskraftverstärkers (52) festzulegen; und
- unter Berücksichtigung der festgelegten Soll-Größe (ω) mindestens ein Steuersignal (56) an den Motor des elektromechanischen Bremskraftverstärkers (52) auszugeben;
**dadurch gekennzeichnet, dass**
die Elektronikeinrichtung (54) zusätzlich dazu ausgelegt ist,
- unter Berücksichtigung zumindest einer aktuellen Stromstärke (I) eines Motorstroms des Motors des elektromechanischen Bremskraftverstärkers (52) und eines aktuellen Drehwinkels (ϕ) eines Rotors des Motors des elektromechanischen Bremskraftverstärkers (52) eine Höchst-Soll-Größe (ωₘₐₓ) bezüglich einer maximalen Soll-Drehgeschwindigkeit (ωₘₐₓ) des Motors des elektromechanischen Bremskraftverstärkers (52) festzulegen; und
- die Soll-Größe (ω) bezüglich der Soll-Drehgeschwindigkeit (ω) des Motors des elektromechanischen Bremskraftverstärkers (52) höchstens gleich der festgelegten Höchst-Soll-Größe (ωₘₐₓ) festzulegen.

2. Steuervorrichtung (50) nach Anspruch 1, wobei die Elektronikeinrichtung (54) dazu ausgelegt ist, eine Schätzgröße (F_{estimated}) für eine Einbremskraft des einem Hauptbremszylinder des Bremssystems vorgelagerten elektromechanischen Bremskraftverstärkers (52) in den Hauptbremszylinder unter Berücksichtigung zumindest der aktuellen Stromstärke (I) des Motorstroms des Motors und des aktuellen Drehwinkels (ϕ) des Rotors des Motors zu schätzen und die Höchst-Soll-Größe (ωₘₐₓ) unter Berücksichtigung der Schätzgröße (F_{estimated}) für die Einbremskraft festzulegen.

3. Steuervorrichtung (50) nach Anspruch 1 oder 2, wobei die Elektronikeinrichtung (54) dazu ausgelegt ist, ein Lastmoment (L), welches das Bremssystem dem Motor des elektromechanischen Bremskraftverstärkers (52) entgegensetzt, unter Berücksichtigung zumindest der aktuellen Stromstärke (I) des Motorstroms des Motors und des aktuellen Drehwinkels (ϕ) des Rotors des Motors zu schätzen und die Höchst-Soll-Größe (ωₘₐₓ) und/oder die Schätzgröße (F_{estimated}) für die Einbremskraft unter Berücksichtigung des geschätzten Lastmoments (L) festzulegen.

4. Steuervorrichtung (50) nach Anspruch 3, wobei die Elektronikeinrichtung (54) dazu ausgelegt ist:
- ein Motormoment (Mₘₒₜₒᵣ) des Motors des elektromechanischen Bremskraftverstärkers (52) unter Berücksichtigung zumindest der aktuellen Stromstärke (I) des Motorstroms des Motors festzulegen;
- eine Winkelbeschleunigung (ω•) des Rotors des Motors des elektromechanischen Bremskraftverstärkers (52) unter Berücksichtigung zumindest des aktuellen Drehwinkels (ϕ) des Rotors des Motors festzulegen;
- ein Produkt aus der Winkelbeschleunigung (ω•) des Rotors des Motors des elektromechanischen Bremskraftverstärkers (52) und einer Trägheit (θ) des Motors festzulegen; und
- das Lastmoment (L) unter Berücksichtigung zumindest einer Differenz zwischen dem Motormoment (Mₘₒₜₒᵣ) des Motors und dem Produkt aus der Winkelbeschleunigung (ω•) und der Trägheit (θ) festzulegen.

5. Steuervorrichtung (50) nach einem der vorhergehenden Ansprüche, wobei die Elektronikeinrichtung (54) dazu ausgelegt ist, eine Laständerung (Cₜₒₜₐₗ) einer Last, welche das Bremssystem dem Motor des elektromechanischen Bremskraftverstärkers (52) entgegensetzt, unter Berücksichtigung zumindest der aktuellen Stromstärke (I) des Motorstroms des Motors und des aktuellen Drehwinkels (ϕ) des Rotors des Motors zu schätzen, und die Höchst-Soll-Größe (ωₘₐₓ) und/oder die Schätzgröße (Festimated) für die Einbremskraft unter Berücksichtigung der geschätzten Laständerung (Cₜₒₜₐₗ) festzulegen.

6. Steuervorrichtung (50) nach den Ansprüchen 4 und 5, wobei die Elektronikeinrichtung (54) dazu ausgelegt ist:
- einen Verstellweg (τ) eines Kolbens des elektromechanischen Bremskraftverstärkers (52) unter Berücksichtigung zumindest des aktuellen Drehwinkels (ϕ) des Rotors des Motors festzulegen;
- eine mittels des Motors des elektromechanischen Bremskraftverstärkers (52) ausgeübte Motorkraft (Fₛᵤₚ) unter Berücksichtigung des Lastmoments (L) festzulegen;
- eine zeitliche Ableitung (Fₛᵤₚ•) oder einen Gradienten der mittels des Motors des elektromechanischen Bremskraftverstärkers ausgeübten Motorkraft (Fₛᵤₚ) festzulegen; und
- die Laständerung (Cₜₒₜₐₗ) als Quotienten aus der zeitlichen Ableitung (Fₛᵤₚ•) oder dem Gradienten der Motorkraft (Fₛᵤₚ) geteilt durch den Verstellweg (τ) des Kolbens des elektromechanischen Bremskraftverstärkers (52) festzulegen.

7. Elektromechanischer Bremskraftverstärker (52) für ein Bremssystem eines Fahrzeugs, mit einer Steuervorrichtung (50) nach einem der vorhergehenden Ansprüche.

8. Bremssystem für ein Fahrzeug, mit einem elektromechanischen Bremskraftverstärker (52) nach dem Anspruch 7.

9. Bremssystem nach Anspruch 8, wobei der elektromechanische Bremskraftverstärker (52) einem Hauptbremszylinder des Bremssystems vorgelagert ist.

10. Verfahren zum Betreiben eines elektromechanischen Bremskraftverstärkers (52) eines Bremssystems eines Fahrzeugs mit den Schritten:
Festlegen einer Soll-Größe (ω) bezüglich einer Soll-Drehgeschwindigkeit (ω) eines Motors des elektromechanischen Bremskraftverstärkers (52) unter Berücksichtigung zumindest eines Bremsvorgabesignals (58) bezüglich eines Bremswunsches eines Fahrers des Fahrzeugs und/oder einer Geschwindigkeitssteuerautomatik des Fahrzeugs; und
Ansteuern des Motors des elektromechanischen Bremskraftverstärkers (52) unter Berücksichtigung der festgelegten Soll-Größe (ω);
**gekennzeichnet durch** die Schritte:
Festlegen einer Höchst-Soll-Größe (ωₘₐₓ) bezüglich einer maximalen Soll-Drehgeschwindigkeit (ωₘₐₓ) des Motors des elektromechanischen Bremskraftverstärkers (52) unter Berücksichtigung zumindest einer aktuellen Stromstärke (I) eines Motorstroms des Motors des elektromechanischen Bremskraftverstärkers (52) und eines aktuellen Drehwinkels (ϕ) eines Rotors des Motors des elektromechanischen Bremskraftverstärkers (52);
wobei die Soll-Größe (ω) bezüglich der Soll-Drehgeschwindigkeit (ω) des Motors des elektromechanischen Bremskraftverstärkers (52) höchstens gleich der festgelegten Höchst-Soll-Größe (ωₘₐₓ) festgelegt wird.

11. Verfahren nach Anspruch 10, wobei zum Festlegen der Höchst-Soll-Größe (ωₘₐₓ) bezüglich der maximalen Soll-Drehgeschwindigkeit (ωₘₐₓ) des Motors des elektromechanischen Bremskraftverstärkers (52) eine Schätzgröße (F_{estimated}) für eine Einbremskraft des einem Hauptbremszylinder des Bremssystems vorgelagerten elektromechanischen Bremskraftverstärkers (52) in den Hauptbremszylinder unter Berücksichtigung zumindest der aktuellen Stromstärke (I) des Motorstroms des Motors und des aktuellen Drehwinkels (ϕ) des Rotors des Motors geschätzt wird, und die Höchst-Soll-Größe (ωₘₐₓ) unter Berücksichtigung der Schätzgröße (F_{estimated}) für die Einbremskraft festgelegt wird.

12. Verfahren nach Anspruch 10 oder 11, wobei zum Festlegen der Höchst-Soll-Größe (ωₘₐₓ) bezüglich der maximalen Soll-Drehgeschwindigkeit (ωₘₐₓ) des Motors des elektromechanischen Bremskraftverstärkers (52) und/oder zum Schätzen der Schätzgröße (F_{estimated}) für die Einbremskraft zumindest ein Lastmoment (L), welches das Bremssystem dem Motor des elektromechanischen Bremskraftverstärkers (52) entgegensetzt, unter Berücksichtigung zumindest der aktuellen Stromstärke (I) des Motorstroms des Motors und des aktuellen Drehwinkels (ϕ) des Rotors des Motors geschätzt wird, und die Höchst-Soll-Größe (ωₘₐₓ) und/oder die Schätzgröße (F_{estimated}) für die Einbremskraft unter Berücksichtigung des geschätzten Lastmoments (L) festgelegt werden.

13. Verfahren nach Anspruch 12, wobei zum Schätzen des Lastmoments (L) zumindest die folgenden Schritte ausgeführt werden:
Festlegen eines Motormoment (Mₘₒₜₒᵣ) des Motors des elektromechanischen Bremskraftverstärkers (52) unter Berücksichtigung zumindest der aktuellen Stromstärke (I) des Motorstroms des Motors;
Festlegen einer Winkelbeschleunigung (ω•) des Rotors des Motors des elektromechanischen Bremskraftverstärkers (52) unter Berücksichtigung zumindest des aktuellen Drehwinkels (ϕ) des Rotors des Motors;
Festlegen eines Produkts aus der Winkelbeschleunigung (ω•) des Rotors des Motors des elektromechanischen Bremskraftverstärkers (52) und einer Trägheit (θ) des Motors; und
Festlegen des Lastmoments (L) unter Berücksichtigung zumindest einer Differenz zwischen dem Motormoment (Mₘₒₜₒᵣ) des Motors und dem Produkt aus der Winkelbeschleunigung (ω•) und der Trägheit (θ).

14. Verfahren nach einem der Ansprüche 10 bis 13, wobei zum Festlegen der Höchst-Soll-Größe (ωₘₐₓ) bezüglich der maximalen Soll-Drehgeschwindigkeit (ωₘₐₓ) des Motors des elektromechanischen Bremskraftverstärkers (52) und/oder zum Schätzen der Schätzgröße (F_{estimated}) für die Einbremskraft zumindest eine Laständerung (Cₜₒₜₐₗ) einer Last, welche das Bremssystem dem Motor des elektromechanischen Bremskraftverstärkers (52) entgegensetzt, unter Berücksichtigung zumindest der aktuellen Stromstärke (I) des Motorstroms des Motors und des aktuellen Drehwinkels (ϕ) des Rotors des Motors geschätzt wird, und die Höchst-Soll-Größe (ωₘₐₓ) und/oder die Schätzgröße (F_{estimated}) für die Einbremskraft unter Berücksichtigung der geschätzten Laständerung (Cₜₒₜₐₗ) festgelegt werden.

15. Verfahren nach den Ansprüchen 13 und 14, wobei zum Schätzen der Laständerung (Cₜₒₜₐₗ) zumindest die folgenden Schritte ausgeführt werden:
Festlegen eines Verstellwegs (τ) eines Kolbens des elektromechanischen Bremskraftverstärkers (52) unter Berücksichtigung zumindest des aktuellen Drehwinkels (ϕ) des Rotors des Motors;
Festlegen einer mittels des Motors des elektromechanischen Bremskraftverstärkers (52) ausgeübten Motorkraft (Fₛᵤₚ) unter Berücksichtigung des Lastmoments (L);
Festlegen einer zeitlichen Ableitung (Fₛᵤₚ•) oder eines Gradienten der mittels des Motors des elektromechanischen Bremskraftverstärkers (52) ausgeübten Motorkraft (Fₛᵤₚ); und
Festlegen der Laständerung (Cₜₒₜₐₗ) als Quotient aus der zeitlichen Ableitung (Fₛᵤₚ•) oder dem Gradienten der Motorkraft (Fₛᵤₚ) geteilt durch den Verstellweg (τ) des Kolbens des elektromechanischen Bremskraftverstärkers (52).

## Claims

1. Control device (50) for at least one electromechanical brake booster (52) of a brake system of a vehicle, having
an electronic device (54) that is designed for the purpose of
- specifying at least one desired value (ω) in relation to a desired rotational speed (ω) of a motor of the electromechanical brake booster (52) taking into account at least one brake-specifying signal (58) that is output to the electronic device (54) in relation to a braking request of a driver of the vehicle and/or an automatic speed-controlling system of the vehicle; and
- outputting at least one control signal (56) to the motor of the electromechanical brake booster (52) taking into account the desired value (ω) that is specified;
**characterized in that**
the electronic device (54) is in addition designed for the purpose of
- specifying a highest desired value (ωₘₐₓ) in relation to a maximum desired rotational speed (ωₘₐₓ) of the motor of the electromechanical brake booster (52) taking into account at least one prevailing current strength (I) of a motor current of the motor of the electromechanical brake booster (52) and a prevailing rotation angle (ϕ) of a rotor of the motor of the electromechanical brake booster (52); and
- specifying the desired value (ω) in relation to the desired rotational speed (ω) of the motor of the electromechanical brake booster (52) as close as possible to the highest desired value (ωₘₐₓ) that is specified.

2. Control device (50) according to Claim 1, wherein the electronic device (54) is designed for the purpose of estimating an estimated value (F_{estimated}) for a braking force into the master brake cylinder of the electromechanical brake booster (52) that is upstream of a master brake cylinder of the brake system taking into account at least the prevailing current strength (I) of the motor current of the motor and the prevailing rotation angle (ϕ) of the rotor of the motor, and for the purpose of specifying the highest desired value (ωₘₐₓ) taking into account the estimated value (F_{estimated}) for the braking force.

3. Control device (50) according to Claim 1 or 2, wherein the electronic device (54) is designed for the purpose of estimating a load torque (L), which the brake system sets against the motor of the electromechanical brake booster (52), taking into account at least the prevailing current strength (I) of the motor current of the motor and the prevailing rotation angle (ϕ) of the rotor of the motor, and for the purpose of specifying the highest desired value (ωₘₐₓ) and/or the estimated value (F_{estimated}) for the braking force taking into account the estimated load torque (L).

4. Control device (50) according to Claim 3, wherein the electronic device (54) is designed for the purpose of:
- specifying a motor torque (Mₘₒₜₒᵣ) of the motor of the electromechanical brake booster (52) taking into account at least the prevailing current strength (I) of the motor current of the motor;
- specifying an angular acceleration (ω•) of the rotor of the motor of the electromechanical brake booster (52) taking into account at least the prevailing rotation angle (ϕ) of the rotor of the motor;
- specifying a product of the angular acceleration (ω•) of the rotor of the motor of the electromechanical brake booster (52) and an inertia (θ) of the motor; and
- specifying the load torque (L) taking into account at least a difference between the motor torque (Mₘₒₜₒᵣ) of the motor and the product of the angular acceleration (ω•) and the inertia (θ).

5. Control device (50) according to any one of the preceding claims, wherein the electronic device (54) is designed for the purpose of estimating a load change (Cₜₒₜₐₗ) of a load, which the brake system sets against the motor of the electromechanical brake booster (52), taking into account at least the prevailing current strength (I) of the motor current of the motor and the prevailing rotation angle (ϕ) of the rotor of the motor, and for the purpose of specifying the highest desired value (ωₘₐₓ) and/or the estimated value (F_{estimated}) for the braking force taking into account the estimated load change (Cₜₒₜₐₗ).

6. Control device (50) according to Claims 4 and 5, wherein the electronic device (54) is designed for the purpose of:
- specifying an adjustment travel (_{T}) of a piston of the electromechanical brake booster (52) taking into account at least the prevailing rotation angle (ϕ) of the rotor of the motor;
- specifying a motor force (Fₛᵤₚ) that is exerted by means of the motor of the electromechanical brake booster (52) taking into account the load torque (L);
- specifying a time derivative (Fₛᵤₚ•) or a gradient of the motor force (Fₛᵤₚ) that is exerted by means of the motor of the electromechanical brake booster; and
- specifying the load change (Cₜₒₜₐₗ) as a quotient of the time derivative (Fₛᵤₚ•) or the gradient of the motor force (Fₛᵤₚ) divided by the adjustment travel (_{T}) of the piston of the electromechanical brake booster (52) .

7. Electromechanical brake booster (52) for a brake system of a vehicle, having a control device (50) according to any one of the preceding claims.

8. Brake system for a vehicle, having an electromechanical brake booster (52) according to Claim 7.

9. Brake system according to Claim 8, wherein the electromechanical brake booster (52) is upstream of a master brake cylinder of the brake system.

10. Method for operating an electromechanical brake booster (52) of a brake system of a vehicle having the steps:
specifying a desired value (ω) in relation to a desired rotational speed (ω) of a motor of the electromechanical brake booster (52) taking into account at least one brake-specifying signal (58) in relation to a braking request of a driver of the vehicle and/or an automatic speed-controlling system of the vehicle; and
actuating the motor of the electromechanical brake booster (52) taking into account the desired value (ω) that is specified;
**characterized by** the steps:
specifying a highest desired value (ωₘₐₓ) in relation to a maximum desired rotational speed (ωₘₐₓ) of the motor of the electromechanical brake booster (52) taking into account at least one prevailing current strength (I) of a motor current of the motor of the electromechanical brake booster (52) and a prevailing rotation angle (ϕ) of a rotor of the motor of the electromechanical brake booster (52);
wherein the desired value (ω) in relation to the desired rotational speed (ω) of the motor of the electromechanical brake booster (52) is specified as close as possible to the highest desired value (ωₘₐₓ) that is specified.

11. Method according to Claim 10, wherein an estimated value (F_{estimated}) for a braking force into the master brake cylinder of the electromechanical brake booster (52) that is upstream of a master brake cylinder of the brake system is estimated taking into account at least the prevailing current strength (I) of the motor current of the motor and the prevailing rotation angle (ϕ) of the rotor of the motor in order to specify the highest desired value (ωₘₐₓ) in relation to the maximum desired rotational speed (ωₘₐₓ) of the motor of the electromechanical brake booster (52), and the highest desired value (ωₘₐₓ) is specified taking into account the estimated value (F_{estimated}) for the braking force.

12. Method according to Claim 10 or 11, wherein at least one load torque (L), which the brake system sets against the motor of the electromechanical brake booster (52), is estimated taking into account at least the prevailing current strength (I) of the motor current of the motor and the prevailing rotation angle (ϕ) of the rotor of the motor in order to specify the highest desired value (ωₘₐₓ) in relation to the maximum desired rotational speed (ωₘₐₓ) of the motor of the electromechanical brake booster (52) and/or in order to estimate the estimated value (F_{estimated}) for the braking force, and the highest desired value (ωₘₐₓ) and/or the estimated value (F_{estimated}) for the braking force is/are specified taking into account the estimated load torque (L).

13. Method according to Claim 12, wherein at least the following steps are performed in order to estimate the load torque (L):
specifying a motor torque (Mₘₒₜₒᵣ) of the motor of the electromechanical brake booster (52) taking into account at least the prevailing current strength (I) of the motor current of the motor;
specifying an angular acceleration (ω•) of the rotor of the motor of the electromechanical brake booster (52) taking into account at least the prevailing rotation angle (ϕ) of the rotor of the motor;
specifying a product of the angular acceleration (ω•) of the rotor of the motor of the electromechanical brake booster (52) and an inertia (θ) of the motor; and
specifying the load torque (L) taking into account at least a difference between the motor torque (Mₘₒₜₒᵣ) of the motor and the product of the angular acceleration (ω•) and the inertia (θ).

14. Method according to any one of Claims 10 to 13, wherein at least one load change (Cₜₒₜₐₗ) of a load, which the brake system sets against the motor of the electromechanical brake booster (52), is estimated taking into account at least the prevailing current strength (I) of the motor current of the motor and the prevailing rotation angle (ϕ) of the rotor of the motor in order to specify the highest desired value (ωₘₐₓ) in relation to the maximum desired rotational speed (ωₘₐₓ) of the motor of the electromechanical brake booster (52) and/or in order to estimate the estimated value (F_{estimated}) for the braking force, and the highest desired value (ωₘₐₓ) and/or the estimated value (F_{estimated}) for the braking force is/are specified taking into account the estimated load change (Cₜₒₜₐₗ).

15. Method according to Claims 13 and 14, wherein at least the following steps are performed in order to estimate the load change (Ctotai) :
specifying an adjustment travel (_{T}) of a piston of the electromechanical brake booster (52) taking into account at least the prevailing rotation angle (ϕ) of the rotor of the motor;
specifying a motor force (Fₛᵤₚ) that is exerted by means of the motor of the electromechanical brake booster (52) taking into account the load torque (L);
specifying a time derivative (Fₛᵤₚ•) or a gradient of the motor force (Fₛᵤₚ) that is exerted by means of the motor of the electromechanical brake booster (52); and
specifying the load change (Cₜₒₜₐₗ) as a quotient of the time derivative (Fₛᵤₚ•) or the gradient of the motor force (Fₛᵤₚ) divided by the adjustment travel (_{T}) of the piston of the electromechanical brake booster (52).

## Revendications

1. Dispositif de commande (50) pour au moins un servofrein électromécanique (52) d'un système de freinage d'un véhicule, comportant
un dispositif électronique (54), lequel est conçu
- pour définir au moins une grandeur de consigne (ω) se rapportant à une vitesse de rotation de consigne (ω) d'un moteur du servofrein électromécanique (52) en tenant compte d'au moins un signal de prescription de freinage (58) délivré au dispositif électronique (54) et se rapportant à un souhait de freinage d'un conducteur du véhicule et/ou un système automatique de commande de vitesse du véhicule ; et
- pour délivrer au moins un signal de commande (56) au moteur du servofrein électromécanique (52) en tenant compte de la grandeur de consigne définie (ω) ;
**caractérisé en ce que**
le dispositif électronique (54) est en outre conçu
- pour définir une grandeur de consigne la plus élevée (ωₘₐₓ) se rapportant à une vitesse de rotation de consigne maximale (ωₘₐₓ) du moteur du servofrein électromécanique (52) en tenant compte d'au moins une intensité de courant actuelle (I) d'un courant du moteur du servofrein électromécanique (52) et d'un angle de rotation actuel (ϕ) d'un rotor du moteur du servofrein électromécanique (52) ; et
- pour définir la grandeur de consigne (ω) se rapportant à la vitesse de rotation de consigne (ω) du moteur du servofrein électromécanique (52) au maximum de manière égale à la grandeur de consigne la plus élevée définie (ωₘₐₓ).

2. Dispositif de commande (50) selon la revendication 1, dans lequel le dispositif électronique (54) est conçu pour estimer une grandeur estimée (F_{estimated}) pour une force de freinage du servofrein électromécanique (52) placé en amont d'un maître-cylindre de frein du système de freinage dans le maître-cylindre de frein en tenant compte d'au moins l'intensité de courant actuelle (I) du courant du moteur et de l'angle de rotation actuel (ϕ) du rotor du moteur et pour définir la grandeur de consigne la plus élevée (ωₘₐₓ) en tenant compte de la grandeur estimée (F_{estimated}) pour la force de freinage.

3. Dispositif de commande (50) selon la revendication 1 ou 2, dans lequel le dispositif électronique (54) est conçu pour estimer un couple de charge (L), que le système de freinage oppose au moteur du servofrein électromécanique (52), en tenant compte d'au moins l'intensité de courant actuelle (I) du courant du moteur et de l'angle de rotation actuel (ϕ) du rotor du moteur et pour définir la grandeur de consigne la plus élevée (ωₘₐₓ) et/ou la grandeur estimée (F_{estimated}) pour la force de freinage en tenant compte du couple de charge estimé (L) .

4. Dispositif de commande (50) selon la revendication 3, dans lequel le dispositif électronique (54) est conçu :
- pour définir un couple de moteur (Mₘₒₜₒᵣ) du moteur du servofrein électromécanique (52) en tenant compte d'au moins l'intensité de courant actuelle (I) du courant du moteur ;
- pour définir une accélération angulaire (ω·) du rotor du moteur du servofrein électromécanique (52) en tenant compte d'au moins l'angle de rotation actuel (ϕ) du rotor du moteur ;
- pour définir un produit de l'accélération angulaire (ω·) du rotor du moteur du servofrein électromécanique (52) par une inertie (θ) du moteur ; et
- pour définir le couple de charge (L) en tenant compte d'au moins une différence entre le couple de moteur (Mₘₒₜₒᵣ) du moteur et le produit de l'accélération angulaire (ω·) par l'inertie (θ).

5. Dispositif de commande (50) selon l'une des revendications précédentes, dans lequel le dispositif électronique (54) est conçu pour estimer une variation de charge (Cₜₒₜₐₗ) d'une charge, que le système de freinage oppose au moteur du servofrein électromécanique (52), en tenant compte d'au moins l'intensité de courant actuelle (I) du courant du moteur et de l'angle de rotation actuel (ϕ) du rotor du moteur et pour définir la grandeur de consigne la plus élevée (ωₘₐₓ) et/ou la grandeur estimée (F_{estimated}) pour la force de freinage en tenant compte de la variation de charge estimée (Cₜₒₜₐₗ).

6. Dispositif de commande (50) selon les revendications 4 et 5, dans lequel le dispositif électronique (54) est conçu :
- pour définir un déplacement de réglage (τ) d'un piston du servofrein électromécanique (52) en tenant compte d'au moins l'angle de rotation actuel (ϕ) du rotor du moteur ;
- pour définir une force de moteur (Fₛᵤₚ) exercée au moyen du moteur du servofrein électromécanique (52) en tenant compte du couple de charge (L) ;
- pour définir une dérivée temporelle (Fₛᵤₚ•) ou un gradient de la force de moteur (Fₛᵤₚ) exercée au moyen du moteur du servofrein électromécanique ; et
- pour définir la variation de charge (Cₜₒₜₐₗ) en tant que quotient de la dérivée temporelle (Fₛᵤₚ•) ou du gradient de la force de moteur (Fₛᵤₚ) divisé (e) par le déplacement de réglage (τ) du piston du servofrein électromécanique (52).

7. Servofrein électromécanique (52) pour un système de freinage d'un véhicule, comportant un dispositif de commande (50) selon l'une des revendications précédentes.

8. Système de freinage pour un véhicule, comportant un servofrein électromécanique (52) selon la revendication 7.

9. Système de freinage selon la revendication 8, dans lequel le servofrein électromécanique (52) est placé en amont d'un maître-cylindre de frein du système de freinage.

10. Procédé de fonctionnement d'un servofrein électromécanique (52) d'un système de freinage d'un véhicule, comportant les étapes de :
définition d'une grandeur de consigne (ω) se rapportant à une vitesse de rotation de consigne (ω) d'un moteur du servofrein électromécanique (52) en tenant compte d'au moins un signal de prescription de freinage (58) se rapportant à un souhait de freinage d'un conducteur du véhicule et/ou un système automatique de commande de vitesse du véhicule ; et
commande du moteur du servofrein électromécanique (52) en tenant compte de la grandeur de consigne définie (ω) ;
**caractérisé par** les étapes de :
définition d'une grandeur de consigne la plus élevée (ωₘₐₓ) se rapportant à une vitesse de rotation de consigne maximale (ωₘₐₓ) du moteur du servofrein électromécanique (52) en tenant compte d'au moins une intensité de courant actuelle (I) d'un courant du moteur du servofrein électromécanique (52) et d'un angle de rotation actuel (ϕ) d'un rotor du moteur du servofrein électromécanique (52) ;
la grandeur de consigne (ω) se rapportant à la vitesse de rotation de consigne (ω) du moteur du servofrein électromécanique (52) étant définie au maximum de manière égale à la grandeur de consigne la plus élevée définie (ωₘₐₓ).

11. Procédé selon la revendication 10, dans lequel pour définir la grandeur de consigne la plus élevée (ωₘₐₓ) se rapportant à la vitesse de rotation de consigne maximale (ωₘₐₓ) du moteur du servofrein électromécanique (52), une grandeur estimée (F_{estimated}) pour une force de freinage du servofrein électromécanique (52) placé en amont d'un maître-cylindre de frein du système de freinage dans le maître-cylindre de frein est estimée en tenant compte d'au moins l'intensité de courant actuelle (I) du courant du moteur et de l'angle de rotation actuel (ϕ) du rotor du moteur, et la grandeur de consigne la plus élevée (ωₘₐₓ) est définie en tenant compte de la grandeur estimée (F_{estimated}) pour la force de freinage.

12. Procédé selon la revendication 10 ou 11, dans lequel, pour définir la grandeur de consigne la plus élevée (ωₘₐₓ) se rapportant à la vitesse de rotation de consigne maximale (ωₘₐₓ) du moteur du servofrein électromécanique (52) et/ou pour estimer la grandeur estimée (F_{estimated}) pour la force de freinage, au moins un couple de charge (L), que le système de freinage oppose au moteur du servofrein électromécanique (52), est estimé en tenant compte d'au moins l'intensité de courant actuelle (I) du courant du moteur et de l'angle de rotation actuel (ϕ) du rotor du moteur, et la grandeur de consigne la plus élevée (ωₘₐₓ) et/ou la grandeur estimée (F_{estimated}) pour la force de freinage sont définies en tenant compte du couple de charge estimé (L).

13. Procédé selon la revendication 12, dans lequel, pour l'estimation du couple de charge (L), au moins les étapes suivantes sont effectuées :
définition d'un couple de moteur (Mₘₒₜₒᵣ) du moteur du servofrein électromécanique (52) en tenant compte d'au moins l'intensité de courant actuelle (I) du courant du moteur ;
définition d'une accélération angulaire (ω·) du rotor du moteur du servofrein électromécanique (52) en tenant compte d'au moins l'angle de rotation actuel (ϕ) du rotor du moteur ;
définition d'un produit de l'accélération angulaire (ω·) du rotor du moteur du servofrein électromécanique (52) par une inertie (θ) du moteur ; et
définition du couple de charge (L) en tenant compte d'au moins une différence entre le couple de moteur (Mmotor) du moteur et le produit de l'accélération angulaire (ω·) par l'inertie (θ).

14. Procédé selon l'une des revendications 10 à 13, dans lequel, pour définir la grandeur de consigne la plus élevée (ωₘₐₓ) se rapportant à la vitesse de rotation de consigne maximale (ωₘₐₓ) du moteur du servofrein électromécanique (52) et/ou pour estimer la grandeur estimée (F_{estimated}) pour la force de freinage, au moins une variation de charge (Ctotai) d'une charge, que le système de freinage oppose au moteur du servofrein électromécanique (52), est estimée en tenant compte d'au moins l'intensité de courant actuelle (I) du courant du moteur et de l'angle de rotation actuel (ϕ) du rotor du moteur et la grandeur de consigne la plus élevée (ωₘₐₓ) et/ou la grandeur estimée (F_{estimated}) pour la force de freinage sont définies en tenant compte de la variation de charge estimée (Cₜₒₜₐₗ).

15. Procédé selon les revendications 13 et 14, dans lequel, pour l'estimation de la variation de charge (Cₜₒₜₐₗ), au moins les étapes suivantes sont effectuées :
définition d'un déplacement de réglage (τ) d'un piston du servofrein électromécanique (52) en tenant compte d'au moins l'angle de rotation actuel (ϕ) du rotor du moteur ;
définition d'une force de moteur (Fₛᵤₚ) exercée au moyen du moteur du servofrein électromécanique (52) en tenant compte du couple de charge (L) ;
définition d'une dérivée temporelle (Fₛᵤₚ•) ou d'un gradient de la force de moteur (Fₛᵤₚ) exercée au moyen du moteur du servofrein électromécanique (52) ; et
définition de la variation de charge (Ctotai) en tant que quotient de la dérivée temporelle (Fₛᵤₚ·) ou du gradient de la force de moteur (Fₛᵤₚ) divisé(e) par le déplacement de réglage (τ) du piston du servofrein électromécanique (52) .
